**Europäisches Patentamt**

**European Patent Office**

**Office européen des brevets**

(19)

(11) Veröffentlichungsnummer: **0 205 837**
**A1**

(12)
# EUROPÄISCHE PATENTANMELDUNG

(21) Anmeldenummer: **86106046.5**

(22) Anmeldetag: **02.05.86**

(51) Int. Cl.⁴: **B 62 D 33/06**

(30) Priorität: **25.05.85 DE 3518898**
**12.07.85 DE 3524900**

(43) Veröffentlichungstag der Anmeldung: **30.12.86**
**Patentblatt 86/52**

(84) Benannte Vertragsstaaten: **DE FR GB IT SE**

(71) Anmelder: **Iveco Magirus Aktiengesellschaft,**
**Schillerstrasse 2, D-7900 Ulm/Donau (DE)**

(72) Erfinder: **Wodarski, Heinrich, Dipl.-Ing.,**
**Schwalbenweg 18, D-7918 Illertissen-Au (DE)**

(74) Vertreter: **Socha, Peter, Iveco Magirus AG**
**Postfach 2740 Schillerstrasse 2, D-7900 Ulm (DE)**

(54) **Kippvorrichtung eines Fahrerhauses, insbesondere eines Nutzfahrzeuges.**

(57) Bei einer Kippvorrichtung (15) für ein kippbares Fahrerhaus (2) eines Nutzfahrzeuges ist zwischen dem Fahrzeugrahmen (3) und dem Fahrerhaus (2) ein aus zwei schwenkbar miteinander verbundenen Hebeln (6, 8) bestehendes Koppelgestänge (14) vorgesehen. Der obere mit der Unterseite des Fahrerhauses (2) gelenkig verbundene Hebel (8) umfaßt ein Hubaggregat (12), wodurch der Hebel in seiner Längsrichtung teleskopierbar ist. Der andere Hebel (6) des Koppelgestänges (14) ist vergleichsweise kurz ausgebildet und fahrzeugrahmenfest angelenkt. Für einen Kippbetrieb gelangt er in zwei seitliche oder innere rahmenfeste Schwenkanschläge (4, 5). Die Anordnung des ersten und des zweiten Schwenkanschlags (4 bzw. 5) sowie der Gelenkstellen des Koppelgestänges (14) und die Hebellängen des Gestänges sind so getroffen, daß bei einem Hochkippen des Fahrerhauses (2) der rahmenangelenkte Hebel (6) am zweiten Schwenkanschlag (5) solange anliegt, bis der Schwerpunkt (9) des Fahrerhauses (2) den oberen Totpunkt (10) des oberen Fahrerhausschwenkpunkts (1) durchläuft und dann durch das Eigengewicht des Fahrerhauses (2) bei Bewegung in seine stabile Kippendstellung der Hebel (6) an den ersten Schwenkanschlag (4) anschlägt, wodurch der Abstand (11) zwischen dem fahrerhausangelenkten Hebel (8) und dem Schwenkpunkt (1) des Fahrerhauses vergrößert wird.

Die Erfindung betrifft eine Kippvorrichtung für ein um
einen Schwenkpunkt kippbares Fahrerhaus eines Fahrzeuges,
insbesondere Nutzfahrzeuges, gemäß Oberbegriff des Anspruchs 1.

Aus DE-OS 29 45 585 ist eine hydraulische Kippvorrichtung
bekannt, bei der ein langgestrecktes teleskopierbares
Koppelgestänge zwischen der Fahrerhausunterseite und der
Oberseite des Fahrzeugrahmens angelenkt ist. Im Betrieb
pumpt sich das System während der Fahrt auf, und zwar
durch die Frequenz des gefederten Fahrerhauses. Der dann
aufgepumpte Zylinder behindert das Eintauchen des Fahrerhauses.

Aus DE-OS 33 14 404, DE-GM 83 36 277 und DE-OS 20 30 450
sind zwar grundsätzlich gattungsgemäße Kippvorrichtungen
bekannt, die ein Eintauchen bzw. ein Federn eines nichtgekippten Fahrerhauses während der Fahrt gestatten. Die
Vorrichtungen sind jedoch vergleichsweise aufwendig getroffen und gehen mit diversen Nachteilen einher. So kann
der Kippzylinder gemäß DE-OS 33 14 404 nur in bestimmten,
begrenzten Positionen eingebaut werden. Gemäß DE-GM
83 36 277 ist die einwandfreie Funktion des Systems abhängig von einer genau definierten Lage des Schwerpunktes. Bei einer Schwerpunktverlagerung nach hinten, z.B.
durch Kabinenaufbauten, kann ein nicht erwünschter, labiler Zustand erreicht werden. Grundsätzlich kennzeichnen
sich die vorgenannten bekannten Kippvorrichtungen durch
ein Hubaggregat, welches als unterer Hebel des Koppelgestänges an die Oberseite des Fahrzeugrahmens angelenkt
ist, wobei der Anlenkpunkt bezüglich des Rahmens unveränderbar ist. Bei einem Teleskopieren treten dann große
Betätigungskräfte aufgrund von sehr kleinen wirksamen
Hebellängen dann ein, wenn ein gekipptes Fahrerhaus aus
seiner stabilen Hochstellung über den oberen Totpunkt hinaus nach unten zurückgeschwenkt werden soll.

Aufgabe der Erfindung ist die Schaffung einer Kippvorrichtung für ein kippbares Fahrerhauses eines Fahrzeuges, die zum einen ein Ein- und Ausfedern eines nichtgekippten Fahrerhauses während der Fahrt ermöglicht, einfach
und kompakt aufgebaut ist und zum anderen die Nachteile
der vorgenannten bekannten Vorrichtungen vermeidet,
insbesondere die Einrichtung einer stabilen Kipplage
eines gekippten Fahrerhauses ermöglicht und dennoch
günstige wirksame Hebellängen praktisch für jeden Kippzustand des Fahrerhauses einrichtet.

Gelöst wird die der Erfindung zugrundeliegende Aufgabe
durch die im kennzeichnenden Teil des Anspruchs 1 angegebenen Merkmale. Insbesondere ist ein aus zwei Hebeln
bestehendes Koppelgestänge vorgesehen, wobei das Hubaggregat im oberen Betätigungshebel vorgesehen ist,
welcher an die Unterseite des Fahrerhauses angelenkt
ist. Der andere Hebel des Koppelgestänges ist vergleichsweise kurz ausgebildet und am Fahrzeugrahmen in einer
Weise angelenkt, daß die wirksamen Hebellängen während
eines Kippvorganges veränderbar sind, wobei in einer Ausführungsvariante ein unterer rahmenbefestigter Hebel mit zwei seitlichen Schwenkanschlägen in geeigneter Weise zusammenwirkt: bei einem
Kippen des Fahrerhauses liegt der am Fahrzeugrahmen angelenkte Hebel an einem unteren Schwenkanschlag seitlich
so lange an, bis der Schwerpunkt des Fahrerhauses den
Fahrerhausschwenkpunkt am oberen Totpunkt durchläuft
und dann durch das Eigengewicht des Fahrerhauses bei
Bewegung des Fahrerhauses in seine stabile Kippendstellung der am Fahrzeugrahmen angelenkte Hebel um einen
Winkel bis zum anderen seitlichen (oberen) Schwenkanschlag anschlägt, wobei der obere, das Hubaggregat enthaltende Hebel in einen größeren Abstand zum Schwenkpunkt
des Fahrerhauses positioniert wird, so daß geringere Kräfte des Hubaggregats genügen, um ein gekipptes Fahrerhaus wieder zurückzubewegen. Die Veränderbarkeit des Anlenkpunktes des Hubaggregates wird mit Hilfe einfacher mechanischer Mittel und mit Hilfe weniger Teile bewerkstelligt. Die Kippvorrichtung ist großenteils unabhängig von der eigentlichen Lage des Schwerpunkts der Kabine.

Ein besonders einfacher Aufbau ergibt sich, wenn nur ein Koppelgestänge pro Fahrerhaus vorgesehen ist. In Weiterbildung der Erfindung können zwei im wesentlichen gleich ausgebildete Koppelgestänge auf beiden Fahrzeugseiten vorgesehen sein, was bei besonders schweren Fahrerhäusern von Vorteil wäre.

Das Fahrerhaus wird zweckmäßig durch Federn abgestützt, so daß bei nichtgekippter Fahrerhausendstellung der andere Hebel etwa in der Mitte zwischen seinen Schwenkanschlägen zu liegen kommt, wie dies an sich auch teilweise nach dem Stand der Technik möglich ist, hier jedoch mit weniger aufwendigen Mitteln und mit Hilfe eines kompakten Systems, das ohne weiteres in bekannte kippbare Fahrerhäuser integriert werden kann.

Der am Fahrzeugrahmen angelenkte untere Hebel des Koppelgestänges kann in vorteilhafter Ausführung der Erfindung einarmig ausgebildet sein, d.h. die Hebelanlenkpunkte befinden sich im wesentlichen an den Längsenden des Hebels. Alternativ kann vorgesehen sein, den rahmenangelenkten Hebel jenseits seines beweglichen Anlenkpunktes mit dem anderen Hebel über das Schwenkgelenk hinaus mit einer Verlängerung vorzusehen, mit der die seitlichen rahmenfesten Schwenkanschläge in Eingriff bringbar sind. Die Verlängerung ist hierbei zweckmäßigerweise einstückiger Bestandteil des Hebels und insbesondere geradlinig ausgebildet, wodurch der Aufbau weiter vereinfacht ist.

Die Schwenkanschläge ihrerseits sind vorzugsweise auf
einer rahmenfesten Befestigungskonsole entweder einstückig mit dieser ausgebildet oder als Zusatzteil auf
letzterer befestigt. In letzter Ausführungsvariante sind
diese vorzugsweise austauschbar.

Durch die Erfindung wird mithin eine Befestigung eines
hydraulischen Kippzylinders an einem Fahrerhaus und an
einem am Rahmen angebrachten Schwingarm eingerichtet,
wobei der Schwingarm in seinem Schwenkbereich durch
Schwenkanschläge begrenzt wird. Der Kippzylinder ist
durch den Schwingarm beweglich und ermöglicht so ein
behinderungsfreies Ein- und Ausfedern des Fahrerhauses.
Beim Kippen des Fahrerhauses legt sich der Schwingarm
zunächst an den unteren Schwenkanschlag an. Überschreitet der Schwerpunkt des Fahrerhauses den Totpunkt, so
schlägt der Schwingarm aus seiner labilen Lage in die
stabile um und legt sich an den oberen Anschlag, wobei
eine Vergrößerung des wirksamen Hebelarms Kippzylinderachse - Schwenkpunkt / Fahrerhaus erreicht wird. Durch
Vergrößerung des Hebelarms wird die erforderliche Kraft
zum Zurückkippen des Fahrerhauses verringert. Ist das
Fahrerhaus zurückgekippt, liegt der Schwingarm zunächst
auf dem unteren Anschlag an. Beim erstmaligen Einfedern
des Fahrerhauses schiebt sich der Kippzylinder zusammen.
Beim nächstmaligen Ausfedern des Fahrerhauses gelangt der
Kippzylinder mit dem Schwingarm schließlich in seine Neutralstellung.

Eine weitere Ausführungsvariante der Erfindung kennzeichnet sich durch erste und zweite Schwenkanschläge, welche
integriert mit dem anderen Hebel der Kippvorrichtung und
innerhalb dieses Hebels ausgebildet sind.

Es können mehrere erste und zweite Schwenkanschläge vorgesehen sein.

Die integrierten Schwenkanschläge werden bevorzugt durch Paßfedern gebildet, welche an einer rahmenfesten Querachse oder einem rahmenfesten Bolzen auf dem Umfang drehfest angeordnet sind. Der andere Hebel weist in seinem rahmenfesten Anlenkbereich eine Hohlnabe auf, welcher auf dem Bolzen innerhalb eines Schwenkbereiches drehbar ist, wobei Umfangsanschläge der Nabe den Schwenkbereich begrenzen, und zwar dann, wenn diese mit den zugehörigen Seitenflächen der Paßfedern in Eingriff gelangen.

Die Schwenkanschläge können grundsätzlich nachgiebig, d.h. anschlagdämpfend ausgebildet sein.

Letztgenannte Erfindungsvariante sorgt mit Hilfe einfacher Mittel für einen sehr kompakten Aufbau durch entsprechende Ausführung des anderen Hebels bzw. Schwingarms, an welchem das Hubaggregat angelenkt ist. Die kompakte Ausführung geht mit einer abgeschlossenen Einheit einher, welche gegen Umwelteinflüsse sehr widerstandsfähig ist.

Die Erfindung wird nachfolgend anhand von Ausführungsbeispielen unter Bezugnahme auf die beigefügte Zeichnung näher beschrieben; es zeigen:

Fig. 1   die Kippvorrichtung in schematischer Seitenansicht in ihrer neutralen Stellung eines nichtgekippten Fahrerhauses,

Fig. 2   die Kippvorrichtung nach Fig. 1 während eines Hochkippens des Fahrerhauses vor Überschreiten des oberen Totpunktes,

Fig. 3    die Kippvorrichtung nach den Fig. 1 und 2 bei
         vollständig hochgekipptem Fahrerhaus und Überschreitung des oberen Totpunktes, und


Fig. 4, 5 die Kippvorrichtung in anderer Ausgestaltung
         im Hinblick auf die Ausbildung des anderen Hebels, dargestellt im Querschnitt bzw. in einer
         Seitenansicht.


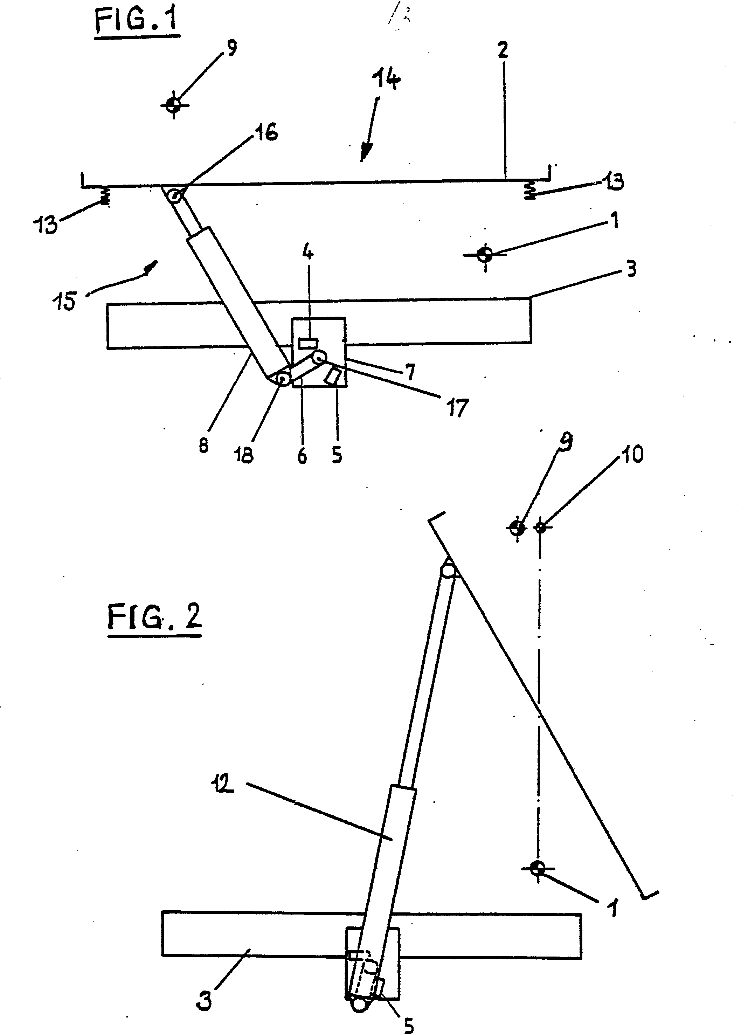

Gemäß den Fig. 1 bis 3 ist eine Kippvorrichtung 15 zwischen der Unterseite eines kippbaren Lkw-Fahrerhauses 2
und dem Fahrzeugrahmen 3 angelenkt.


Die Kippvorrichtung 15 umfaßt insbesondere ein Koppelgestänge 14 bestehend aus zwei gelenkig miteinander verbundenen Hebeln 6,8, wobei der eine (obere) Hebel 8 der
eigentliche Betätigungshebel ist, welcher ein integriertes Hubaggregat 12 aufweist und mithin der Hebel 8 teleskopierbar ist. Der Hebel 8 ist oberseitig an einer fahrerhausfesten Querachse 16 angelenkt.


Auf der anderen Seite des Hebels 8 befindet sich ein
Schwenkgelenk 18 in einer Schwenkverbindung mit dem
anderen (unteren) fahrzeugrahmenangelenkten Hebel 6,
der vergleichsweise kurz ausgebildet ist. Im Ausführungsbeispiel der Zeichnung wird die Anlenkstelle des
Hebels 6 mit dem Fahrzeugrahmen 3 durch eine rahmenfeste Querachse 17 gebildet, die ihrerseits auf einer
rahmenfesten Befestigungskonsole 7 vorgesehen ist. Die Befestigungskonsole 7 umfaßt ferner zwei seitliche
Schwenkanschläge 4,5 für den kurzen Hebel 6, wobei
der eine Schwenkanschlag 4 an einer oberen und der
andere Schwenkanschlag 5 an einer unteren Stelle der
Befestigungskonsole 7 vorgesehen sind. Befindet sich
der Hebel 6 in einem Eingriff mit dem oberen Schwenkanschlag 4, so erstreckt sich der Hebel 6 im wesentlichen horizontal. Befindet sich der Hebel 6 andererseits in einem Eingriff mit dem unteren Schwenkanschlag 5,
so bildet der Hebel 6 zur Horizontalen einen Winkel,
**welcher vom Federweg des Fahrerhauses 2 sowie der Länge**
**des Hebels 6 abhängt und beispielsweise 60° beträgt.**

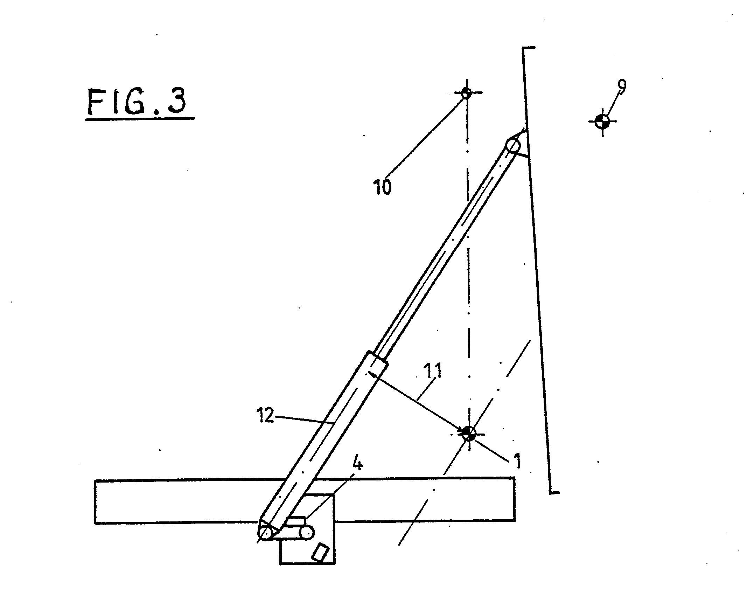

Bei normalem Fahrbetrieb des Lastkraftwagens kann das
nichtgekippte Fahrerhaus 2 aufgrund der Stützfedern 13
und aufgrund der Neutralstellung des Hebels 6 zwischen
den beiden Schwenkanschlägen 4,5 frei ein- und ausfedern.
Wird das Fahrerhaus 2 um seinen Schwenkpunkt 1 durch
Teleskopieren des hydraulischen Hubaggregats 12 gekippt,
so verbleibt das Fahrerhaus 2 anfangs in seiner neutralen
nichtgekippten Stellung, bis der Hebel 6 an den unteren
Schwenkanschlag 5 gemäß Fig. 2 anschlägt und aufgrund
eines fortgesetzten Teleskopierens des Hubaggregats 12
das Fahrerhaus 2 in eine Hochlage geschwenkt wird. Durchschreitet hierbei der Schwerpunkt 9 des Fahrerhauses 2
den oberen Totpunkt 10 in vertikaler Verlängerung des
Schwenkpunktes 1 des Fahrerhauses 2, so wird aufgrund
des Eigengewichts des Fahrerhauses 2 das Koppelgestänge 14
derart bewegt, daß der kurze Schwingarm oder Hebel 6 in
Schwenkrichtung des Fahrerhauses 2 in eine horizontale
Hochlage mit seitlichem Anschlag am oberen Schwenkanschlag 4 bewegt wird, wie dies aus der Fig. 3 hervorgeht. Dadurch gelangt der das Hubaggregat 12 enthaltende eigentliche Betätigungshebel 8 in einen (größeren)
Abstand 11 zum Schwenkpunkt 1 des Fahrerhauses 2. Der Hebel 8 wird noch um ein geringfügiges Maß durch die
Hydraulik des Hubaggregats verlängert, bis das Fahrerhaus 2 seine vollständig hochgekippte Endstellung gemäß Fig. 3 erreicht, in welcher der Schwerpunkt 9 des
Fahrerhauses 2 deutlich vom oberen Totpunkt 10 beabstandet ist, mithin eine stabile hochgekippte Endstellung ohne Arretierungsmittel eingerichtet wird, die
auch bei unterschiedlichen Belastungszuständen des
Lastkraftwagens stabil bleibt.

Ein Zurückkippen des Fahrerhauses 2 erfolgt mit umgekehrten Bewegungsabläufen: der Hebel 8 gemäß Fig. 3
wird durch entsprechende Steuerung des Hubaggregats 12
verkürzt, wodurch der Schwerpunkt 9 des Fahrerhauses
den oberen Totpunkt 10 gemäß Fig. 3 im Gegenuhrzeigersinn durchläuft. Unmittelbar nach Durchlauf des oberen
Totpunktes 10 schwenkt der kurze Hebel 6 in seine andere
Stellung gemäß Fig. 2 mit seitlichem Anschlag an den unteren Schwenkanschlag 5 um, worauf durch weiteres Verkürzen
des Hebels 8 das Fahrerhaus 2 letztlich in seine horizontale nichtgekippte Grundstellung zurückgeschwenkt wird.
Beim erstmaligen Einfedern des Fahrerhauses 2 wird der
Hebel 8 um ein geringes Maß weiter verkürzt, so daß er
bei einem nachfolgenden Ausfedern wieder die in Fig. 1
gezeigte neutrale Stellung einnimmt.

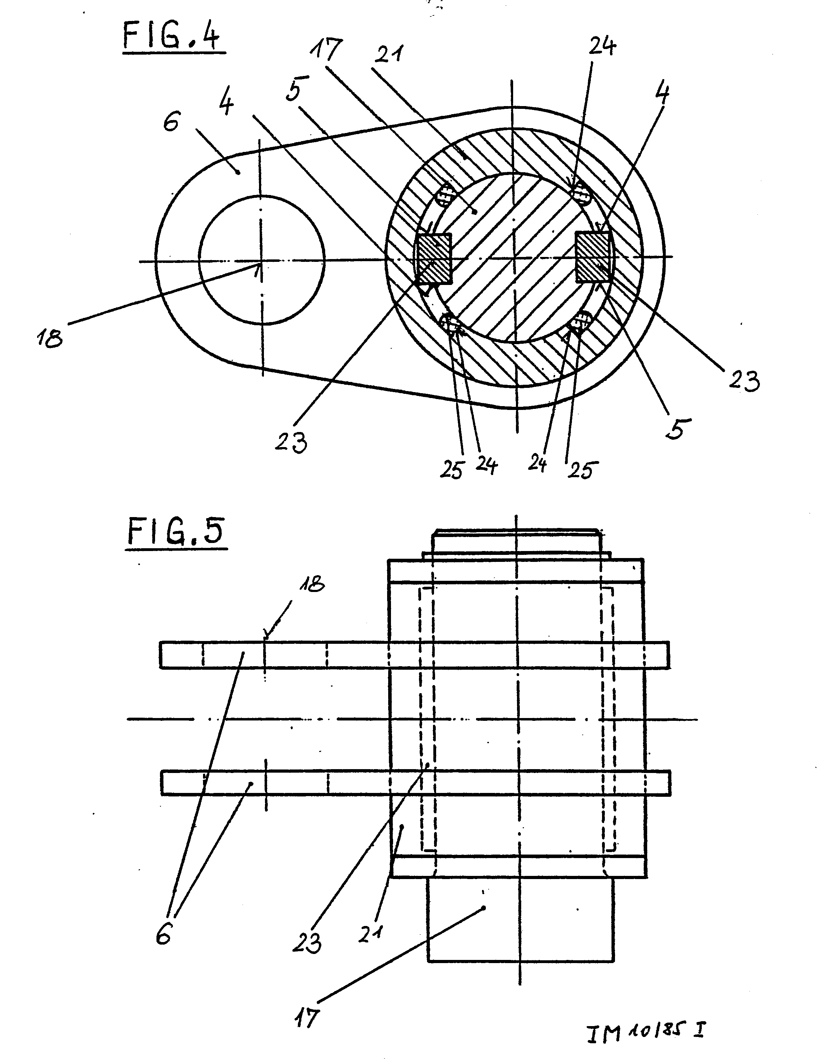

Die in den Fig. 4 und 5 veranschaulichte Ausführungsvariante eines Hebels 6 sieht nicht wie nach der ersten
Variante seitliche Schwenkanschläge 4,5 vor, sondern
integriert mit dem Hebel 6 angeordnete Schwenkanschläge 4,5,
die innerhalb des eigentlichen Hebels 6 gelegen sind.

Insbesondere umfaßt der Schwingarm oder Hebel 6 eine Hohlnabe 21 für die Aufnahme eines rahmenfesten Bolzens 17, der
der rahmenfesten Querachse der ersten Ausführungsvariante entspricht. Auf dem Bolzen 17 kann die Nabe 21 und mithin der gesamte andere Hebel 6 innerhalb eines Schwenkwinkels geschwenkt werden, wobei Umfangsanschläge 24 der Hohlnabe 21 den Schwenkbereich begrenzen, die ihrerseits mit den entsprechenden Seitenwänden von Paßfedern eingreifen, welche im rahmenfesten Bolzen 17 eingelassen sind. Die Seitenflächen der Paßfedern 23 bilden hierbei die erfindungsgemäßen Schwenkanschläge 4 bzw. 5. Ersichtlich ist gemäß Ausführungsvariante nach den Fig. 4 und 5 nicht nur ein erster Schwenkanschlag 4 bzw. ein zweiter Schwenkanschlag 5 vorgesehen, sondern jeweils zwei. Auch können mehr als zwei Paßfedern 23 vorgesehen sein. Die Anzahl der Paßfedern ist abhängig von der Kippkraft und dem benötigten Schwenkwinkel des Schwingarms bzw. anderen Hebels 6.

In besonderer Ausführungsform gelangen die Umfangsanschläge 24 der Nabe 21 nicht direkt in einen Eingriff mit den Schwenkanschlägen 4 und 5, sondern es sind zusätzlich Gummis oder Kunststoffleisten 25 zwischengeordnet, die als anschlagdämpfende Einrichtungen und mithin für eine günstige Kraftverteilung dienen.

Der Kippzylinder bzw. das Hubaggregat 12 ist an seitlichen Laschen des anderen Hebels 6 angelenkt, die insbesondere der Fig. 5, links, zu entnehmen sind.

Alle in der Beschreibung erwähnten und/oder in der Zeichnung dargestellten neuen Merkmale für sich oder in sinnvoller Kombination sind erfindungswesentlich, auch soweit sie in den Ansprüchen nicht ausdrücklich beansprucht sind.

IM *10* /85 I ẼP

ESP So/Hk/Ar

Kippvorrichtung eines Fahrerhauses,
insbesondere eines Nutzfahrzeuges

## Patentansprüche

1. Kippvorrichtung (15) für ein um einen Schwenkpunkt (1)
   kippbares Fahrerhaus (2) eines Fahrzeuges mit einem
   zwischen Fahrzeugrahmen (3) und Fahrerhaus (2) gelenkig angebrachten, aus zwei schwenkbar verbundenen Hebeln (6,8) bestehenden Koppelgestänge (14), dessen einer
   Hebel (8) durch ein Hubaggregat (12) in Hebellängsrichtung teleskopierbar ist und dessen anderer Hebel (6)
   zwei Schwenkanschläge (4,5) aufweist, dadurch  g e -
   k e n n z e i c h n e t ,  daß der das Hubaggregat
   (12) enthaltende eigentliche Betätigungshebel (8) für
   das Kippen des Fahrerhauses (2) an letzterem um eine
   fahrerhausfeste Querachse (16) und der andere vergleichsweise kurze Hebel (6) des Koppelgestänges (14)
   am Fahrzeugrahmen (3) in einer Weise angelenkt sind sowie der andere Hebel (6) einen rahmenfesten ersten Schwenkanschlag (4) und einen rahmenfesten zweiten Schwenkanschlag
(5) in einer Weise besitzt, daß bei einem Kippen des Fahrerhauses (2) der andere Hebel (6) am zweiten Schwenkanschlag
(5) so lange anliegt, bis der Schwerpunkt (9) des Fahrerhauses (2) seinen Schwenkpunkt am oberen Totpunkt (10)
überläuft und dann durch das Eigengewicht des Fahrerhauses
(2) bei Bewegung in Richtung seiner stabilen Kippendstellung der andere Hebel (6) bei Vergrößerung des Abstandes
(11) des Betätigungshebels (8) zum Schwenkpunkt (1) an
den ersten Schwenkanschlag (4) gelangt.

2. Kippvorrichtung nach Anspruch 1, dadurch g e k e n n -
   z e i c h n e t , daß der erste Schwenkanschlag (4) seitlich oberhalb des anderen Hebels (6) angeordnet ist und im
   wesentlichen horizontal verläuft, während der zweite Schwenkanschlag (5) seitlich unterhalb des anderen Hebels (6) ausgebildet ist (Fig. 1-3).

3. Kippvorrichtung nach Anspruch 1 oder 2, dadurch g e -
   k e n n z e i c h n e t , daß zwei im wesentlichen gleich
   ausgebildete Koppelgestänge (14) auf beiden Fahrzeugseiten
   vorgesehen sind.

4. Kippvorrichtung nach einem der Ansprüche 1 bis 3, dadurch
   g e k e n n z e i c h n e t , daß das Fahrerhaus (2)
   durch Federn (13) abgestützt ist, so daß bei nichtgekippter Fahrerhausendstellung der andere Hebel (6) etwa
   in der Mitte zwischen seinen Schwenkanschlägen (4,5) zu
   liegen kommt (Fig. 1).

5. Kippvorrichtung nach einem der Ansprüche 1 bis 4, dadurch
   g e k e n n z e i c h n e t , daß die Anlenkpunkte (17,18)
   des anderen rahmenangelenkten Hebels (6) im wesentlichen
   an den Längsenden des Hebels (6) vorgesehen sind.

6. Kippvorrichtung nach einem der Ansprüche 1 bis 5, dadurch g e k e n n z e i c h n e t , daß der andere rahmenange-lenkte Hebel (6) jenseits seines beweglichen Anlenkpunkts über das Schwenkgelenk (18) hinaus eine Verlängerung aufweist, die mit Schwenkanschlägen in Eingriff bringbar ist.

7. Kippvorrichtung nach Anspruch 6, dadurch g e k e n n - z e i c h n e t , daß die Verlängerung einstückiger Bestandteil des anderen Hebels (6) und der andere Hebel (6) einschließlich Verlängerung im wesentlichen geradlinig ausgebildet ist.

8. Kippvorrichtung nach einem der Ansprüche 1 bis 7, dadurch g e k e n n z e i c h n e t , daß die Schwenkanschläge (4,5) auf einer rahmenfesten Befestigungskonsole (7) einstückig ausgebildet oder als Zusatzteile befestigt sind.

9. Kippvorrichtung nach einem der Ansprüche 1 bis 8, dadurch g e k e n n z e i c h n e t , daß die Schwenkanschläge (4,5) austauschbar angeordnet sind.

10. Kippvorrichtung nach Anspruch 1 und 3 bis 5, dadurch g e k e n n z e i c h n e t , daß der erste und der zweite Schwenkanschlag (4 bzw. 5) integriert mit dem anderen Hebel (6) ausgebildet und innerhalb dieses Hebels (6) angeordnet ist.

11. Kippvorrichtung nach Anspruch 10, dadurch g e k e n n - z e i c h n e t , daß zumindest zwei erste und zweite Schwenkanschläge (4,5) vorgesehen sind.

12. Kippvorrichtung nach Anspruch 11, dadurch g e k e n n - z e i c h n e t , daß die Schwenkanschläge (4,5) durch Paßfedern (23) gebildet sind, welche an einer rahmenfesten Querachse oder einem Bolzen (17) auf dem Umfang drehfest angeordnet sind.

13. Kippvorrichtung nach Anspruch 12, dadurch g e k e n n -
z e i c h n e t , daß der andere Hebel (6) eine Hohlnabe
(21) besitzt, welche auf dem Bolzen (17) angeordnet und
in einem Schwenkbereich drehbar ist, wobei mit der Paßfeder (23) in Eingriff bringbare Umfangsanschläge (24)
der Nabe (21) den Schwenkbereich begrenzen.

14. Kippvorrichtung nach einem der Ansprüche 1 bis 13, dadurch
g e k e n n z e i c h n e t , daß die Schwenkanschläge
(4,5) anschlagdämpfende Einrichtungen (25) besitzen.

0205837

FIG.1

FIG. 2

IM 10/85 I

0205837

FIG.3

IM 10/85 I

0205837

## FIG.4

## FIG.5

IM 10185 I

0205837

Nummer der Anmeldung

# EUROPÄISCHER RECHERCHENBERICHT

Europäisches
Patentamt

EP 86 10 6046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A- 978 964 (FORD)<br>* Figuren 1a,1b; Ansprüche 1,2 *<br>--- | 1 | B 62 D 33/06 |
| A | GB-A-2 055 971 (M.T.M.)<br>* Figur 4; Anspruch 1 *<br>--- | 1 | |
| A | FR-A-2 268 681 (MAGIRUS-DEUTZ)<br>--- | | |
| A | PATENTS ABSTRACTS OF JAPAN, Band 7, Nr. 199 (M-240) 1344 , 3. September 1983; & JP - A - 58 97 569 (SANWA SEIKI K.K.) 10-06-1983<br>--- | | |
| A | PATENTS ABSTRACTS OF JAPAN, Band 7, Nr. 199 (M240) 1344 , 3. September 1983; & JP - A - 58 97 570 (SANWA SEIKI K.K.) 10-06-1983<br>--- | | |
| D,A | DE-U-8 336 277 (S.K.F.)<br>--- | | |
| D,A | DE-A-3 314 404 (YOSHIZAWA)<br>--- | | |
| D,A | DE-A-2 030 450 (FLODIN)<br>--- -/- | | |

|  |  |
|---|---|
| | RECHERCHIERTE SACHGEBIETE (Int. Cl.4) |
| | B 62 D |

Der vorliegende Recherchenbericht wurde für alle Patentansprüche erstellt.

| Recherchenort | Abschlußdatum der Recherche | Prüfer |
|---|---|---|
| DEN HAAG | 01-09-1986 | SCHMITTER J.M. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches
Patentamt

**EUROPÄISCHER RECHERCHENBERICHT**

0205837
Nummer der Anmeldung

EP    86 10 6046

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-2 945 585   (OBERMEYER) | | |
| | ----- | | |

RECHERCHIERTE
SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 01-09-1986 | SCHMITTER J.M. |